# EUROPÄISCHE PATENTSCHRIFT

(11) **EP 1 377 750 B1**
(45) Veröffentlichungstag und Bekanntmachung des Hinweises auf die Patenterteilung: **24.05.2006**
(21) Anmeldenummer: 02740231.2
(22) Anmeldetag: 06.04.2002
(51) Int. Cl.: F03B 13/10, F03B 17/06, F03B 3/04

(54) **BEWEGLICHES, ÜBER- UND UNTERSTRÖMBARES WASSERKRAFTWERK**
MOVEABLE, OVER-FLOWABLE AND UNDER-FLOWABLE HYDRO-ELECTRIC POWER PLANT
CENTRALE HYDROELECTRIQUE MOBILE, PERMETTANT DE CREER UN ECOULEMENT D'EAU SUPERIEUR ET INFERIEUR

(30) Priorität: 08.04.2001 DE 10117552
(43) Veröffentlichungstag der Anmeldung: 07.01.2004
(73) Patentinhaber: Roth, Peter, 76185 Karlsruhe (DE); Roth, Andreas, 76131 Karlsruhe (DE)
(72) Erfinder: Roth, Peter, 76185 Karlsruhe (DE); Roth, Andreas, 76131 Karlsruhe (DE)
(74) Vertreter: Blumenröhr, Dietrich
(86) Internationale Anmeldenummer: PCT/DE2002/001260
(87) Internationale Veröffentlichungsnummer: WO 2002/081905

(56) Entgegenhaltungen:
- DE-C- 644 556
- DE-U- 29 617 318
- GB-A- 2 256 011
- US-A- 5 440 176

## Beschreibung

Die Erfindung betrifft Wasserkraftanlagen an Fließgewässem, die zur besseren Nutzung der kinetischen Energie des fließenden Wassers, über- und unterströmt werden sollen.

Für die kostengünstige Errichtung und den wirtschaftlichen Betrieb von Wasserkraftanlagen an Fließgewässern mit geringen Gefällestufen sind meist folgende grundsätzliche Faktoren zu berücksichtigen:
- Keine Verringerung des Abflußquerschnittes bzw. Anhebung der oberwasserseitigen Wasserspiegellagen bei Hochwasser.
- Starke Reduktion der Energiegewinnung bei Wasserführungen im Gewässer höher der Nennschluckwassermenge der Wasserkraftanlage, resultierend aus dem Gefälleverlust durch Rückstau und dem zusätzlichen Wirkungsgradeinbruch der Turbine, wenn diese nicht nahe dem Konstruktionsgefälle betrieben wird.
- Im Vergleich zu Wasserkraftanlagen mit höherem Gefälle und gleicher Leistung hoher Anteil an Schwemmgut und/oder Geschiebe im Verhältnis der möglichen Energiegewinnung, insbesondere bei Wasserführungen des Gewässers oberhalb der Ausbauwassermenge der Wasserkraftanlage.
- Fischabstiegsmöglichkeit, z. B. Aalabwanderungen, insbesondere in Fließgewässern.
- Möglichst geringer Flächenbedarf im Gewässer und vor allem im Uferbereich.
- Möglichst kurze Bauzeiten des Wasser- und Tiefbaues um das Baurisiko während der Bauphase, die durch Hochwasser beeinträchtigt werden kann, so gering wie möglich zu halten.
- Niedrige Geräuschemission

Zur Energieerzeugung an niedrigen Gefällestufen mit ca. 1 - 10 m Fallhöhe, werden Wasserkraftanlagen, bevorzugt mit axialdurchströmten Wasserturbinen, innerhalb eines festen Baukörpers, oftmals überströmbar, neben oder in einem Staukörper eingebaut.

Es sind auch Ausführungen wie z.B. Stützschwellenkraftwerke bekannt, die überströmbar sind und durch Einleitung des überströmenden Wassers direkt über dem Saugrohr zusätzlich durch die Ejektor - Wirkung einen Nettogefällegewinn erzielen. Gemeinsam ist allen vorgenannten Wasserkraftanlagenausführungen, dass entweder zur Hochwasserentlastung und/oder zur Geschiebeabfuhr zusätzliche Entlastungseinrichtungen erstellt werden müssen.

Ebenso bekannt sind in Wehrtafeln eingebaute, kleine Turbinen-Generatoreinheiten, die im Hochwasserfall, um den erforderlichen Fließquerschnitt freizugeben, komplett hoch gezogen werden. Hierdurch werden zusätzliche Bauwerke zur Hochwasserentlastung und/oder Geschiebeabfuhr vermieden, eine Energiegewinnung ist im Hochwasserfall jedoch nicht mehr möglich.

In der amerikanischen Patentschrift US 4 868 408 ist ein voll umströmbares Wasserkraftwerk beschrieben, welches, an einem frei beweglichen Befestigungsmechanismus hängend, in der Lage und der Höhe veränderbar ist und in Fließgewässern oder zur Nutzung von Meeresströmungen eingesetzt werden kann. Dieses System ist in der Lage kinetische Energie zu nutzen, jedoch ungeeignet, wegen einer fehlenden, erzwungenen Wasserführung zum und hinter dem umströmbaren Wasserkraftwerk, potentielle Energie, z.B. bei Stauhaltungen, zu nutzen.

Die unter dem Gebrauchsmuster DE 296 17 318 U1 eingetragene Erfindung kommt analog zur beweglichen, über- und unterströmbaren Wasserkraftanlage bei niedrigen Gefällestufen zum Einsatz. Das bei dieser Erfindung beschriebene bewegliche, geheberte Saugrohr dient einer einfachen Adaption der Wasserkraftanlage an eine bestehende Staustufe. Durch die schwimmende Konstruktion kann diese Wasserkraftanlage einfach an den potentiellen Einsatzort geflösst werden. Bei dieser Anlagenkonzeption wird jedoch weder die Durchgängigkeit für Geschiebe und Treibgut realisiert, noch erfüllt Sie die Funktion eines Hochwasserentlastungsorgans.

In der Patentschrift Nr. 644556 ist eine Beweglichkeit einer kompakten Turbine-Generatoreinheit dargestellt. Sie dient jedoch ausschließlich einer vereinfachten Handhabung der Anlagenteile im Revisionsfall. Die sonstige Anlagenkonzeption unterscheidet sich nicht vom bekannten Stand der Technik.

Allen vorgenannten Ausführungen ist das Problem gemeinsam, dass nicht gleichzeitig die potentielle und die, mit zunehmender Abflußmenge des Gewässers steigende, kinetische Energie zur Energiegewinnung effizient genutzt wird.

Zudem ist keine Steigerung des Hochwasserabflusses bei gleichzeitiger Geschiebeabfuhr, ohne zusätzliche Entlastungseinrichtung, möglich.

Die im Patentanspruch 1 angegebene Erfindung eines beweglichen, über- und unterströmbaren Wasserkraftwerkes bezweckt, dass sowohl die potentielle als auch, bei einer Wasserführung des Fließgewässers größer dem Schluckvermögen der Turbine, die kinetische Energie optimal genutzt werden kann.

Durch die erfindungsgemäße Anordnung der Turbine und des Generators in einem beweglichen Gehäuse kann dieses, bei Einbau innerhalb eines Gerinnes, gleichzeitig als Wehrverschluss dienen. Beim Anheben des Kraftwerkgehäuses kann ein Fließquerschnitt freigegeben werden, der zur Hochwasserentlastung und/oder Geschiebe- und Treibgutabfuhr dient.

### Durch die erfindungsgemäße Lösung eines beweglichen über- und unterströmbaren Wasserkraftwerkes ergeben sich folgende Vorteile:

- Hohe Energiegewinnung durch senkrechte Anströmung und verwertbarer Staudruck-Effekte und konsequente Nutzung der Ejektor-Wirkung am Saugrohrende, bei Wasserführung des Gewässers größer dem Schluckvermögen der Turbine.
- Verbesserung der Abflusssituation bei Hochwasser, was einer möglichen Wehrerhöhung, zu einer weiteren Steigerung der Energiegewinnung, entgegenkommt.
- Problemlose Geschiebeabfuhr bei Hochwasser durch frei werdende Öffnung unterhalb des Krafthauses.
- Geschwemmsel und Treibgut kann sowohl über, als auch bei Hochwasser zusätzlich unterhalb, des Krafthauses weitergeleitet werden.
- Keine zusätzlichen baulichen und technischen Einrichtungen zur Geschiebeabfuhr nötig.
- Einfache wasserbauliche Arbeiten, was kurze und kostengünstige Bauphasen mit sich bringt.
- Bei konsequenter Umsetzung durch ein Baukastensystem ergibt sich ein erhebliches Kostensenkungspotential.
- Wesentliche Reduktion des Flächenbedarfes im Gewässer und im Uferbereich
- Keine Geräuschemissionsprobleme durch die voll überflutete Bauweise

Zur geeigneten Höhen- und Neigungsverstellung bieten sich Hubeinrichtungen an, z.B. handelsübliche Hydrauliksysteme oder Spindelantriebe, wie dies im Unteranspruch 2 angegeben wird.

Vorteilhaft ist, insbesondere für größere Einheiten, die Verstellung der Höhe und Neigung des Gehäuses 1 durch Veränderung des Auftriebes, z.B. Formgebung des Gehäuses oder durch Fluten und Lenzen von Schwimmkörpern im Gehäuse, wie in Unteranspruch 3 angegeben.

Im Unteranspruch 4 wird die Neigungswinkelveränderung um eine Drehachse beschrieben, wodurch erhebliche Vorteile bei der Kräfteaufnahme und gleichzeitiger Führung des Krafthaus-Gehäuses erzielt werden.

Je nach Wasserkraftwerksgröße werden sich unterschiedliche Konzepte der Drehachsengestaltung, -anordnung und - lagerung ergeben, wie dies in den Unteransprüchen 5 und 6 angegeben wird.

Eine vorteilhafte Ausgestaltung gemäß Unteranspruch 7 ermöglicht die Durchführung sämtlicher Starkstrom-, Steuer-, und Versorgungsleitungen durch die Drehachse als Hohlwelle, wodurch zusätzliche Abdichtungssysteme und Schutzeinrichtungen entfallen. Zusätzlich ist ein Be- und Entlüften des Kraftwerk- Gehäuses durch die Drehachse möglich.

Wird der Einlaufrechen, gemäß Unteranspruch 8, so an das bewegliche Krafthausgebäude gebaut, dass dieser zumindest im oberen Bereich flach ausläuft, z.B. Bogenrechen, und die Reinigung desselben durch von hinten durchgreifende Putzharken erfolgt, ähnlich einer Gegenstromrechenreinigungsmaschine, wie im Unteranspruch 9 beschrieben, so kann das Treibgut und auch Fische über das Krafthausgebäude in das Unterwasser weitergeleitet werden. Durch die flach abfallende, glatte Krafthaus-Gehäuseoberseite wird ein Fischabstieg ermöglicht.

Durch die Anordnung der Drehachse im vorderen, oberen Gehäuseteil kann diese vorteilhaft, gemäß Unteranspruch 10, zur Ausbildung einer Tauchnase verwendet werden.

**In den Zeichnungen ist ein Ausführungsbeispiel vereinfacht dargestellt.**

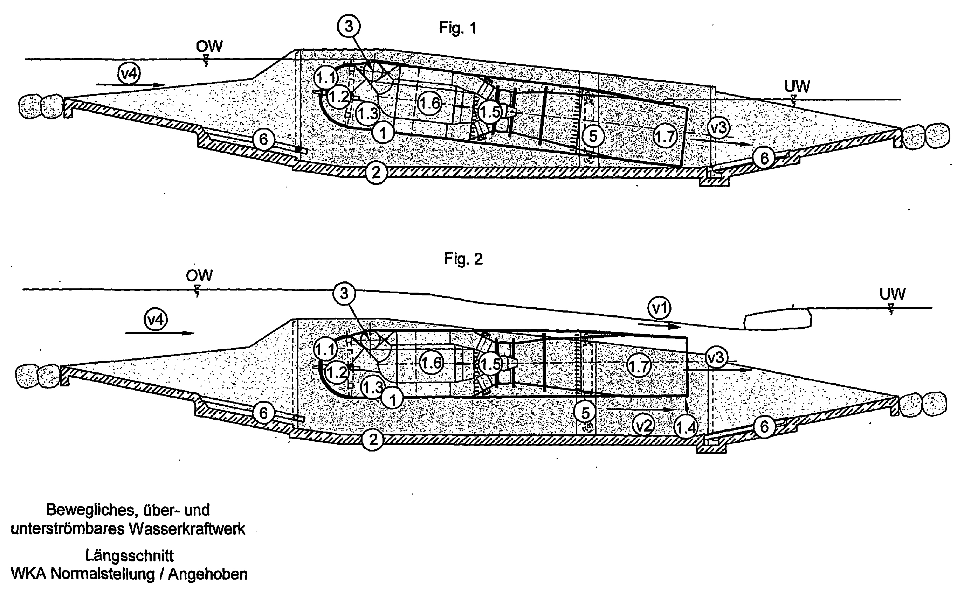

Fig. 1 zeigt einen Längsschnitt des Wasserkraftwerkes in abgesenkter Stellung
Fig. 2 zeigt einen Längsschnitt des Wasserkraftwerkes in angehobener Stellung

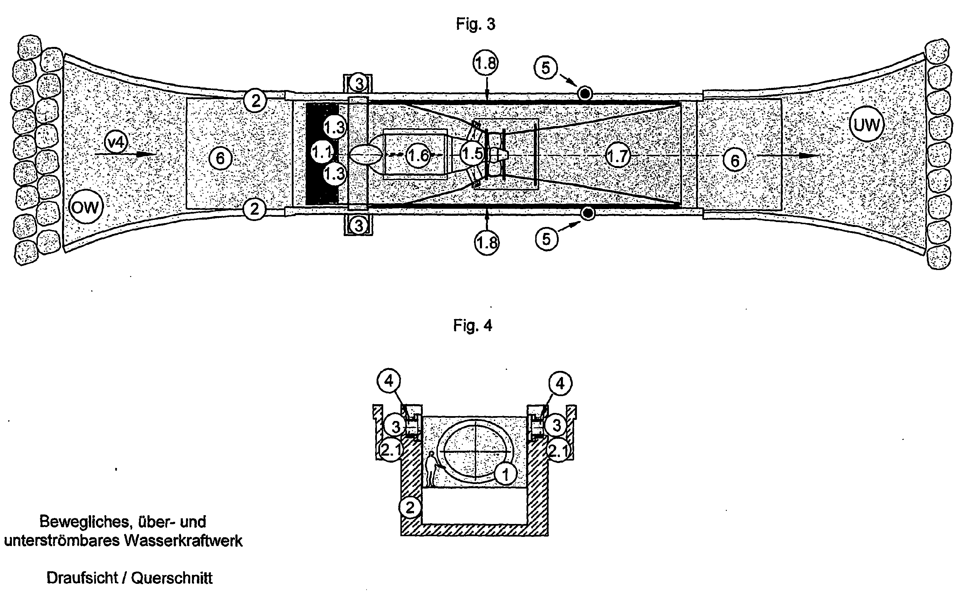

Fig. 3 zeigt eine Draufsicht des Wasserkraftwerkes
Fig. 4 zeigt einen Querschnitt des Wasserkraftwerkes in Höhe der Drehachse

Die maschinentechnische Ausrüstung, bestehend aus einer axialdurchströmten Turbine 1.5 inkl. dem Einlauftrichter 1.3, dem Saugrohr 1.7 und einen entweder direkt oder durch eine Drehzahlübersetzung angetriebenen Generator 1.6, wird innerhalb eines Gehäuses 1 eingebaut, was im herkömmlichen Sinne dem Krafthaus entspricht.

Am vorderen, oberwasserseitigen Ende des Krafthauses befindet sich zur Abhaltung des Treibgutes ein um ca. 180° gebogener Einlaufrechen 1.1. Die Reinigung dieses Bogenrechens erfolgt am zweckmäßigsten durch eine GegenstromRechenreinigungsmaschine 1.2 in Unterwasserausführung.

Das gesamte Gehäuse 1 kann um eine möglichst im vorderen, oberen Bereich des Gehäuses 1 angeordnete Achse 3 geschwenkt werden. Bei Ausführung der Achswelle als Hohlwelle ergibt sich der Vorteil, dass diese gleichzeitig zur Durchführung der Energie-, Steuer- und Versorgungsleitungen zur externen Schaltwarte sowie zur Be- und Entlüftung des Maschinenraumes genutzt werden kann. Wird diese Hohlwelle 3 als festes Bauelement des Gehäuses 2 ausgeführt, so kann diese auch zur Ausbildung einer Tauchnase, zur Sicherstellung der erforderlichen Einlaufüberdeckungshöhe, genutzt werden.

Eingesetzt wird das um die Achse 3 bewegliche Krafthaus 1 in ein, neben oder im Wehrkörper, eingebautes Gerinne 2, das aus bautechnischen Gründen, ähnlich einer Schleuse, mit senkrechten, parallelen Seitenwänden ausgeführt wird. Die Seitenwände des Gerinnes sollten sich im oberwasserseitigen Anströmbereich OW hydraulisch günstig aufweiten, um die Staudruck-Effekte zu verstärken. Auch der Abströmbereich in das Unterwasser UW ist hydraulisch günstig zu gestalten, um den Energierückgewinn der Ejektor - Wirkung zu begünstigen. Das Gehäuse 1 erhält zu den Seitenwänden des Gerinnes 2 und an der Unterkante des unterwasserseitigen Gehäuseteiles ein Abdichtungssystem 1.4 und 1.8.

Die Widerlager 4 der Achse 3 werden in die beiden Seitenwände des Gerinnes 2 angeordnet. Bei Hohlwellenausführung können neben den Seitenwänden, im Bereich der Wellen-Wanddurchführung, wasserdichte Schächte 2.1 angeordnet werden, von denen aus unterirdische Rohre oder Gänge bis zur Schaltwarte geführt werden können.

Die Schwenkbewegung des Gehäuses 1 erfolgt durch geeignete Hebeeinrichtungen 5, wie z. B. Hydraulikzylinder oder Spindelantriebe, die beidseitig am oder im Gehäuse hinter der Drehachse 3, in Richtung Unterwasser UW, angeordnet werden.

Um Revisionsarbeiten an den unter Wasser befindlichen Komponenten durchführen zu können, werden, sowohl oberwasserseitig OW als auch unterwasserseitig UW, Dammbalkenverschlüsse oder bewegliche, seitliche oder am Boden angeordnete Verschlußorgane 6 vorgesehen.

### Die Funktion des beweglichen, über- und unterströmbaren Wasserkraftwerkes ist wie folgt:

Im abgesenkten Zustand, d.h. die untere Hinterkante des beweglichen Krafthaus-Gehäuse 1 sitzt auf der Sohle des Gerinnes 2 auf, fließt die gesamte Wassermenge bis zur Ausbauwassermenge der Turbine 1.5 durch das Gehäuse 1.

Bei Stillstand der Turbine 1.5 oder Wasserführung des Gewässers größer des möglichen, maximalen Wasserdurchsatzes durch die Turbine 1.5 fließt die überschüssige Wassermenge über das Gehäuse 1 und, soweit vorhanden, über den neben dem Gerinne befindlichen Wehrkörper ab.

Wird bei Betrieb der Turbine 1.5 das Gehäuse 1 von Wasser überströmt, fließt das Wasser über das Krafthaus 1 zum Saugrohrende 1.7 hin ab. Die kinetische Energie, der mit der Geschwindigkeit v1 abfließenden Wassermenge, erzeugt, bei entsprechender Formgebung des Gehäuses, den bekannten Ejektor-Effekt, der zur Fallhöhenvergrößerung genutzt werden kann.

Bei weiter ansteigendem Wasserdargebot und Anstieg des Oberwasserspiegels OW wird das Gehäuse 1 um die Achse 3 geschwenkt, wodurch ein freier Durchlass zwischen dem Gehäuse 1 und dem Gerinne 2 freigegeben wird.

Aufgrund der Druckunterschiede, vor und hinter dem Krafthaus, wird unterhalb dem Gehäuse 1 eine höhere Strömungsgeschwindigkeit v2 als die Saugrohraustrittsgeschwindigkeit v3 auftreten, wodurch eine zusätzliche Ejektor-Wirkung zum Fallhöhengewinn erzielt wird.

Durch die, bei großer Wasserführung, erhöhte Anströmgeschwindigkeit v4 zum Kraftwerkseinlauf vergrößert sich bei entsprechender Gestaltung des Gerinnes 2 im Zuströmbereich der Staudruck, wodurch die Energiegewinnung weiter gesteigert werden kann.

Durch steuerungstechnische Maßnahmen kann zur Konstanthaltung eines maximalen Oberwasserstandes, und/oder zur Optimierung der Ejektor-Wirkungen zur Energiegewinnung, das Maß der unterhalb des Kraftwerkgehäuses freigegebenen Öffnung geregelt werden.

## Patentansprüche

1. **Bewegliches, über- und unterströmbares Wasserkraftwerk** zum Einbau in oder neben Stauanlagen bei Fließgewässern, das in der Höhe verstellbar ist, mit einem Einlauftrichter, einer Turbine, einem von dieser angetriebenem Generator und einem Turbinensaugrohr, die eine funktionstüchtige Einheit bilden, wobei:
a.) der Generator (1.6), der Einlauftrichter (1.3), die Turbine (1.5), und das Turbinensaugrohr (1.7) in einem gemeinsamen Gehäuse (1) angeordnet sind,
b.) das Gehäuse (1) zum Einbau in ein Gerinne (2) vorgesehen ist,
**dadurch gekennzeichnet**:
c.) dass ein Abdichtungssystem (1.8) zwischen dem Gehäuse (1) und dem Gerinne (2) vorgesehen ist,
d.) dass das Gehäuse (1) innerhalb des Gerinnes (2) nicht nur in der Höhe, sondern auch im Neigungswinkel veränderbar ist.

2. **Bewegliches, über- und unterströmbares Wasserkraftwerk** nach Patenanspruch 1, **dadurch gekennzeichnet,**
**dass** die Verstellung der Höhe oder des Neigungswinkels des Gehäuses (1) durch geeignete Hubeinrichtungen (5) erfolgt.

3. **Bewegliches, über- und unterströmbares Wasserkraftwerk** nach Patentanspruch 1, **dadurch gekennzeichnet,**
**dass** die Verstellung der Höhe oder des Neigungswinkels des Gehäuses (1) durch einen veränderbaren Auftrieb erfolgt.

4. **Bewegliches, über- und unterströmbares Wasserkraftwerk** nach Patentanspruch 2 oder 3, **dadurch gekennzeichnet,**
**dass** der Neigungswinkel des Gehäuses (1) um eine Drehachse (3) veränderbar ist.

5. **Bewegliches, über- und unterströmbares Wasserkraftwerk** nach Patentanspruch 4, **dadurch gekennzeichnet,**
**dass** die Drehachse (3) als Vollwelle oder Hohlwelle ausgeführt wird.

6. **Bewegliches, über- und unterströmbares Wasserkraftwerk** nach Patentanspruch 5, **dadurch gekennzeichnet,**
**dass** die Lagerung (4) der Welle (3) am Gehäuse (1) oder in den Seitenwänden des Gerinnes (2) angeordnet wird.

7. **Bewegliches, über- und unterströmbares Wasserkraftwerk** nach Patentanspruch 6, **dadurch gekennzeichnet,**
**dass** die Drehachse (3) zur Durchführung von Starkstrom- , Steuer- und Hydraulikleitungen in das Gehäuse (1) und/oder zur Be- und Entlüftung genutzt wird.

8. **Bewegliches, über- und unterströmbares Wasserkraftwerk** nach wenigstens einem der vorhergehenden Patentansprüche, **dadurch gekennzeichnet,**
**dass** zur Treibgutabhaltung an das Gehäuse (1) ein Rechen (1.1) angebaut wird.

9. **Bewegliches, über- und unterströmbares Wasserkraftwerk** nach Patentanspruch 8, **dadurch gekennzeichnet,**
**dass** die Reinigung des Rechens (1.1) durch eine durch die Rechenstäbe hindurchragende Putzharke (1.2) erfolgt.

10. **Bewegliches, über- und unterströmbares Wasserkraftwerk** nach Patentanspruch 5, **dadurch gekennzeichnet,**
**dass** die Welle (3) zur Ausbildung einer Tauchnase dient.

## Claims

1. **Overstreaming and understreaming capable mobile water power plant** for installation in or next to dam facilities with running water, whose depth can be adjusted, with an intake funnel, a turbine, a generator driven by this, and a turbine suction pipe, which form a functional unit, **whereby:**
a) the generator (1.6), the intake funnel (1.3), the turbine (1.5), and the turbine suction pipe (1.7) are located in a mutual housing (1),
b.) the housing (1) is designed for installation in a channel (2),
**characterized in**
c.) that a seal system (1.8) is provided between the housing (1) and the channel (2),
d.) that not only the depth of the housing (1) within the channel (2) is adjustable, but also the angle of inclination.

2. **Overstreaming and understreaming capable mobile water power plant** according to patent claim 1, **marked by,**
the fact that the adjustment of the depth or of the angle of inclination of the housing (1) is performed by suitable lifting devices (5).

3. **Overstreaming and understreamlng capable mobile water power plant** according to patent claim 1, **marked by,**
the fact that the adjustment of the depth or of the angle of inclination of the housing (1) is performed by an adjustable buoyancy.

4. **Overstreaming and understreaming capable mobile water power plant** according to patent claim 2 or 3, **marked by,**
the fact that the angle of inclination of the housing (1) can be changed around an axis of rotation (3).

5. **Overstreaming and undarstreaming capable mobile water power plant** according to patent claim 4, **marked by,**
the fact that the axis of rotation (3) is designed as a solid shaft or hollow shaft.

6. **Overstreaming and understreaming capable mobile water power plant** according to patent claim 5, **marked by,**
the fact that the bearings (4) of the shaft (3) are located on the housing (1) or in the side walls of the channel (2).

7. **Overstreaming and understreaming capable mobile water power plant** according to patent claim 6, **marked by,**
the fact that the axis of rotation (3) is used to accommodate high-voltage, control, and hydraulics lines in the housing (1) and/or ventilation.

8. **Overstreaming and understreaming capable mobile water power plant** according to at least one of the previous patent claims, **marked by,**
the fact that a screen (1.1) is installed on the housing (1) to eliminate flotsam.

9. **Overstreaming and understreaming capable mobile water power plant** according to patent claim 8, **marked by,**
the fact that the cleaning of the screen (1.1) is performed by a cleaning rake (1.2) pulled through the screen bars.

10. **Overstreaming and understreaming capable mobile water power plant** according to patent claim 5, **marked by,**
the fact that the shaft (3) serves to form a submerging cone.

## Revendications

1. **Centrale hydroélectrique mobile, submersible et infiltrable** à installer à l'intérieur ou à côté de barrages au fil de l'eau, réglable en hauteur, pourvue d'un cône de prise d'eau, d'une turbine, d'un générateur actionné par celle-ci et d'un tube d'aspiration qui forment une unité fonctionnelle, **dans lequelle**
a.) le générateur (1.6), le cône de prise d'eau (1.3), la turbine (1.5) et le tuyau d'aspiration (1.7) sont disposés dans une carcasse commune (1),
b.) la carcasse (1) est conçue pour être implantée dans un chenal (2),
**caractérisée en ce**
c.) qu'un système d'étanchéité (1.8) est prévu entre la carcasse (1) et le chenal (2),
d.) que la carcasse (1) est orientable à l'intérieur du chenal (2) par variation non seulement de sa hauteur, mais aussi de son angle d'inclinaison.

2. **Centrale hydroélectrique mobile, submersible et infiltrable** selon la revendication 1, **caractérisée en ce**
**que** le réglage de la hauteur ou de l'angle d'inclinaison de la carcasse (1) est effectué par des dispositifs de levage appropriés (5).

3. **Centrale hydroélectrique mobile, submersible et infiltrable** selon la revendication 1, **caractérisée en ce**
**que** le réglage de la hauteur ou de l'angle d'inclinaison de la carcasse (1) est effectué par variation de la poussée verticale.

4. **Centrale hydroélectrique mobile, submersible et infiltrable** selon les revendications 2 ou 3, **caractérisée en ce**
**que** l'angle d'inclinaison de la carcasse (1) est modifiable autour d'un axe de rotation (3).

5. **Centrale hydroélectrique mobile, submersible et infiltrable** selon la revendication 4, **caractérisée en ce**
**que** l'axe de rotation (3) est exécuté sous la forme d'un arbre plein ou d'un arbre creux.

6. **Centrale hydroélectrique mobile, submersible et infiltrable** selon la revendication 5, **caractérisée en ce**
**que** le logement (4) de l'arbre (3) est disposé sur la carcasse (1) ou dans les parements latéraux du chenal (2).

7. **Centrale hydroélectrique mobile, submersible et infiltrable** selon la revendication 6, **caractérisée en ce**
**que** l'axe de rotation (3) est utilisé pour faire passer les lignes de courant fort, de commande et les canalisations hydrauliques dans la carcasse (1) et/ou pour ventiler et désaérer la centrale.

8. **Centrale hydroélectrique mobile, submersible et infiltrable** selon l'une au moins des revendications citées précédemment, **caractérisée en ce**
**qu'**une grille (1.1) est fixée à la carcasse (1) pour retenir les débris flottants.

9. **Centrale hydroélectrique mobile, submersible et infiltrable** selon la revendication 8, **caractérisée en ce**
**que** le nettoyage de la grille (1.1) est réalisé par un râteau (1.2) dont les dents dépassent à travers les barreaux de la grille.

10. **Centrale hydroélectrique mobile, submersible et infiltrable** selon la revendication 5, **caractérisée en ce**
**que** l'arbre (3) sert à former un ressaut d'immersion.
